# EUROPÄISCHE PATENTSCHRIFT

(11) **EP 1 820 872 B1**
(45) Veröffentlichungstag und Bekanntmachung des Hinweises auf die Patenterteilung: **02.03.2011**
(21) Anmeldenummer: 06000401.7
(22) Anmeldetag: 10.01.2006
(51) Int. Cl.: C23C 4/00, F01D 25/28, B23P 6/00

(54) **Verfahren zur Vorbereitung von Turbinenschaufeln mit einer Abdeckleiste mit Steckverbindung für eine anschließende Behandlung, sowie Turbinenschaufel dafür**
Process of preparing turbine blades with a masking strip having a connector for a subsequent treatment, and turbine blade therefor
Procédé de préparation des aubes de turbomachine avec une bande de masquage ayant un connecteur pour un traitement complémentaire, et aube de turbomachine correspondante

(43) Veröffentlichungstag der Anmeldung: 22.08.2007
(73) Patentinhaber: SIEMENS AKTIENGESELLSCHAFT, 80333 München (DE)
(72) Erfinder: Bozdogan, Halis, 12355 Berlin (DE); Ladru, Francis-Jurjen, Dr., 14050 Berlin (DE); Müller, Jean, 10589 Berlin (DE); Reymann, Helge, 14167 Berlin (DE); Schusch, Manuel, 13595 Berlin (DE)

(56) Entgegenhaltungen:
- DE-A1- 10 233 492
- US-A- 4 530 861
- US-A1- 2005 227 589

## Beschreibung

Die Erfindung betrifft ein Verfahren zur Vorbereitung von Turbinenschaufeln für eine anschließende Behandlung, beispielsweise das Aufbringen einer Beschichtung und/oder einer abtragenden Bearbeitung, wobei die Turbinenschaufel ein Schaufelblatt aufweist, das an zumindest einem Ende von einer Endplatte mit Umfangsflächen begrenzt wird, wobei zumindest eine der Umfangsflächen vor der Behandlung der Turbinenschaufel wenigstens teilweise abgedeckt wird. Die Erfindung betrifft des Weiteren eine Turbinenschaufel mit einem Schaufelblatt, das an zumindest einem Ende von einer Endplatte begrenzt ist, die eine dem Schaufelblatt zugewandte Heißgasseite und daran anschließende Umfangsflächen aufweist.

Turbinenschaufeln wie Leit- und Laufschaufeln, die für Gasturbinen bestimmt sind, werden zur Verbesserung ihrer Temperatur- und/oder Abrasionsfestigkeit mit hierfür geeigneten Metallen, Metalllegierungen oder Keramiken beschichtet. Die Beschichtung geschieht mittels einer Sprühbeschichtungsvorrichtung, in der die Turbinenschaufel sprühbeschichtet wird. Beispiele für Sprühbeschichtungsverfahren sind das atmosphärische Plasmasprühen (APS) und das Hochgeschwindigkeits-Sauerstoff-Brennstoff-Sprühen (HVOF) (vgl. Ullmanns Encyklopedia of Industrial Chemistry, 2003, Band 21, S. 573 und 575).

Bei Turbinenschaufeln unterscheidet man zwischen Leit- und Laufschaufeln. Beide haben ein dem Heißgas ausgesetztes Schaufelblatt, das an einem stirnseitigen Ende in einen Fußkörper übergeht, der der Befestigung der Turbinenschaufel entweder an einem Rotor (Laufschaufel) oder an einer Halterung (Leitschaufel) dient. Eine Leitschaufel weist am anderen Ende des Schaufelblatts zusätzlich einen Kopfkörper auf, der wie der Fußkörper für die Befestigung an einer Halterung bestimmt ist. Fuß- und Kopfkörper bilden am Übergang zum Schaufelblatt Endplatten in Form von Fußplatten bzw. Kopfplatten aus, die eine dem Schaufelblatt zugewandte Heißgasseite und sich daran anschließende Umfangsflächen aufweisen.

Die vorbeschriebene Beschichtung wird nur auf denjenigen Flächen vorgenommen, die dem Heißgas ausgesetzt sind, also das Schaufelblatt und die Heißgasseiten von Fuß- und gegebenenfalls Kopfplatte. Die Umfangsflächen dieser Endplatten sowie die übrigen Teile des Fuß- und gegebenenfalls Kopfkörpers müssen spezifikationsgerecht beschichtungsfrei bleiben, weil sie bereits mechanisch auf Endmaß gebracht worden sind. In der Sprühbeschichtungsvorrichtung werden deshalb der Fußkörper und gegebenenfalls der Kopfkörper bis auf die jeweilige Heißgasseite so gut es geht - abgedeckt. Es ist jedoch kaum zu vermeiden, dass Beschichtungsmaterial auch die der Heißgasseite benachbarten Teile der Umfangsflächen der Endplatten erreicht, es also zu einem so genannten "Overspray" kommt. Dies erfordert in einem nachgeschalteten Verfahrensgang ein Entfernen der Beschichtung durch Abschleifen (Oversprayschleifen). Dabei steht die Gefahr, dass auch nicht beschichtete Teile der Umfangsflächen beschliffen werden und hierdurch das Endmaß verändert wird.

In dem Dokument DE 102 33 492 A1 wird ein Verfahren zum Reparieren eines Schaufelblattsegments eines Gasturbinentriebwerks beschrieben. Das Schaufelsegment ist mit einem Innenkanal versehen, dessen Kanalwandung mit einem Schutzüberzug versehen ist. Um diesen Schutzüberzug bei dem Reparaturverfahren zu schützen, wird bei dem vorbekannten Verfahren ein Maskenteil als Abdeckleiste auf eine Stirnseite der Endplatte des Schaufelsegments aufgesetzt, um diese und insbesondere die darin vorgesehenen Kanäle zu überdecken. Die Fixierung des Maskenteils an der Endplatte erfolgt dabei über separate Haltevorrichtungen, durch welche das Maskenteil und die Endplatte insbesondere verspannt werden.

In dem Dokument US 4,530,861 sind eine Vorrichtung und ein Verfahren zum Überdecken von Teilen der Oberfläche einer Turbinenschaufel während einer Oberflächenbehandlung offenbart. Dabei wird die Turbinenschaufel in eine Vorrichtung elastisch eingespannt. Eine von dem Schaufelblatt entfernte Oberfläche der Turbinenschaufel wird mit Hilfe einer deformierbaren Oberfläche abgedeckt. Beispielsweise kann die zu schützende Oberfläche des Schaufelfußes eine Öffnung umfassen, in welcher ein Vorsprung eines Positionierungsbereiches zur Fixierung der Abdeckvorrichtung eingeführt werden kann.

In dem Dokument US 2005/0227589 A1 ist eine Schutzmaske zum Schutz von Turbinenschaufeln während der Oberflächenbehandlung offenbart. Dabei wird die Schutzmaske unmittelbar an dem Schaufelblatt befestigt.

Der Erfindung liegt die Aufgabe zugrunde, ein Verfahren bereitzustellen, mit dem die Umfangsflächen der Endplatten von Turbinenschaufeln einerseits beim Beschichtungsvorgang und andererseits beim anschließenden Oversprayschleifen geschützt werden können. Eine weitere Aufgabe besteht darin, eine hierfür geeignete Turbinenschaufel zu konzipieren.

Der erste Teil der Aufgabe wird erfindungsgemäß durch ein Verfahren gelöst, bei dem auf wenigstens einer Umfangsfläche eine Abdeckleiste unter Bildung einer Steckverbindung aufgesetzt wird. Grundgedanke der Erfindung ist es also, die Umfangsflächen der Endplatte(n) mit Hilfe von Abdeckleisten zu schützen, die jeweils über eine Steckverbindung an der Turbinenschaufel gehaltert werden. Die Steckverbindung erlaubt ein einfaches und gleichwohl sicheres Fixieren der Abdeckleiste im Bereich der Umfangsflächen. Die Abdeckleiste schützt die Umfangsflächen beim Beschichtungsvorgang vor dem Besprühen mit Beschichtungsmaterial. Soweit es zu einem Overspray, also zu einer Beschichtung eines Teils der Umfangsflächen kommt, kann dieser Overspray nach dem Beschichtungsvorgang durch Schleifen bei noch aufgesteckter Abdeckleiste entfernt werden, wobei die Abdeckleiste den nicht beschichteten Teil der Umfangsflächen schützt. Damit wird die Gefahr des Unterschreitens des Endmaßes wesentlich herabgesetzt.

In Ausbildung der Erfindung ist vorgesehen, dass eine Abdeckleiste bzw. eine jeweils notwendige Anzahl von Abdeckleisten verwendet wird, die im aufgesteckten Zustand den Bereich der jeweiligen Umfangsfläche abdeckt, der sich auf der dem Schaufelblatt abgewandten Seite der Steckverbindung erstreckt. Zu einem Overspray kann es dann nur in dem von der Abdeckleiste freigelassenen Teil kommen.

Nach der Erfindung ist ferner vorgeschlagen, dass Umfangsfläche(n) und Abdeckleiste(n) derart aneinander angepasst werden, dass ihre Steckverbindung eine Nut-Feder-Verbindung ergibt. Dies geschieht vorliegend in der Weise, dass in wenigstens eine der Umfangsflächen eine Nut eingeformt wird und eine Abdeckleiste verwendet wird, die einen Einsteckschenkel aufweist, der in die Nut eingesteckt wird. Die Abdeckleiste kann dabei als Winkelprofil mit einem sich an den Einsteckschenkel anschließenden Schutzschenkel ausgebildet sein, wobei es zweckmäßig ist, wenn Einsteck- und Schutzschenkel im rechten Winkel zueinander liegen.

Es hat sich als zweckmäßig erwiesen, eine Abdeckleiste zu verwenden, deren Länge größer ist als die Tiefe des Schaufelblattes, so dass die Abdeckleiste einen Überstand hat.

Nach der Erfindung ist ferner vorgesehen, dass in die Umfangsflächen zumindest im Bereich der Steckverbindung eine Stufe eingeformt wird. Sie kann an der dem Schaufelblatt abgewandten Seite der Steckverbindung, aber auch an der dem Schaufelblatt zugewandten Seite nach außen vorspringen.

Der zweite Teil der Aufgabe wird erfindungsgemäß durch eine Turbinenschaufel gelöst, bei der wenigstens eine der Umfangsflächen jeweils zumindest eine Steckverbindungsausnehmung aufweist. Soweit eine Steckverbindungsausnehmung vorgesehen ist, ist sie vorliegend als Nut ausgebildet.

Wie schon oben erwähnt, kann die Turbinenschaufel auch so ausgebildet sein, dass die Umfangsflächen im Bereich der Steckverbindungsausnehmung bzw. dem Steckverbindungsvorsprung eine Stufe aufweisen, die entweder auf der dem Schaufelblatt abgewandten oder zugewandten Seite der Steckverbindungsausnehmung bzw. des Steckverbindungsvorsprungs vorspringt.

Entsprechend dem Grundgedanken des erfindungsgemäßen Verfahrens ist des weiteren vorgesehen, dass auf wenigstens einer Umfangsfläche eine Abdeckleiste unter Bildung einer Steckverbindung mit der Steckverbindungsausnehmung bzw. dem Steckverbindungsvorsprung aufgesetzt ist, welche vorteilhafterweise den Bereich der Umfangsfläche abdeckt, der sich auf der dem Schaufelblatt abgewandten Seite der Steckverbindung erstreckt. Die Steckverbindung ist als Nut-Feder-Verbindung ausgebildet. Dies kann in der Weise verwirklicht werden, dass die Abdeckleiste einen Einsteckschenkel aufweist, der in die zumindest eine Steckverbindungsausnehmung passt.

Die Abdeckleiste ist vorteilhafterweise als Winkelprofil mit einer sich an den Einsteckschenkel im Winkel anschließenden Schutzschenkel ausgebildet. Diese können einen rechten Winkel miteinander bilden. Die Länge der Abdeckleiste sollte größer sein als die Tiefe des Schaufelblattes.

Die Abdeckleiste kann aus einem geeigneten Material bestehen, das widerstandsfähig gegenüber dem Obersprayschleifen ist.

Zweckmäßigerweise sollte sie aus einem Metall wie Stahl oder dergleichen bestehen.

Sofern die Turbinenschaufel als Leitschaufel ausgebildet ist, deren Schaufelblatt an beiden Enden von Endplatten begrenzt ist, sollte auf jeweils zumindest eine der Umfangsflächen beider Endplatten eine Abdeckleiste aufgesteckt sein.

In der Zeichnung ist die Erfindung anhand von Ausführungsbeispielen näher veranschaulicht. Es zeigen:
- Figur 1: eine perspektivische Ansicht einer Leitschaufel für eine Gasturbine;
- Figur 2: einen teilweisen Querschnitt durch die Fußplatte der Leitschaufel gemäß Figur 1;
- Figur 3: einen teilweisen Querschnitt durch eine zweite Variante einer Fußplatte und
- Figur 4: einen teilweisen Querschnitt durch eine dritte Variante einer Fußplatte.

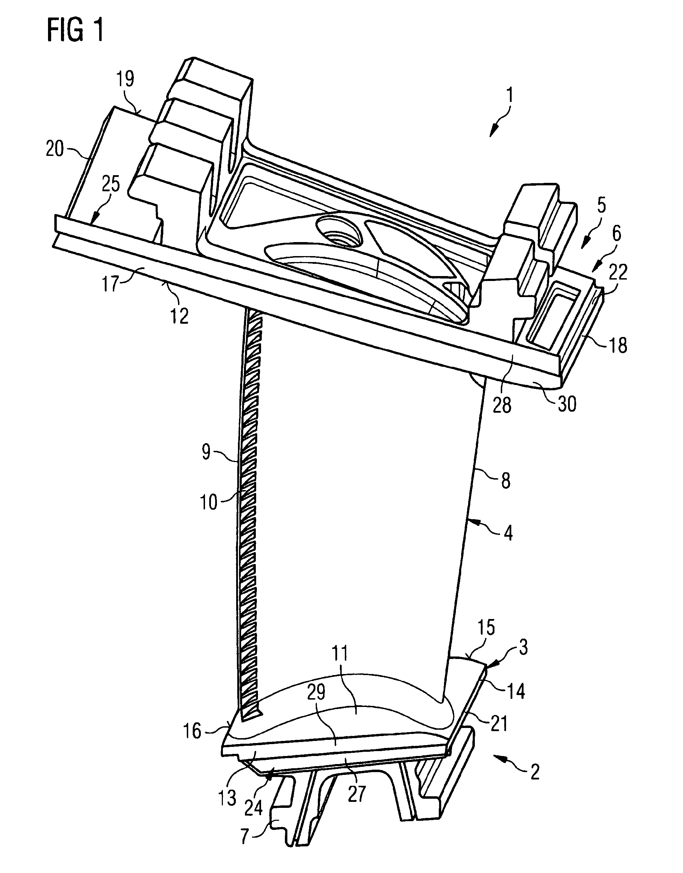

Die in Figur 1 dargestellte Leitschaufel 1 ist für eine Strömungsmaschine bestimmt. Hierbei kann es sich um eine Gasturbine für ein Flugzeug oder ein Kraftwerk zur Elektrizitätserzeugung, eine Dampfturbine oder einen Kompressor handeln.

Die Leitschaufel 1 weist entlang ihrer Erstreckung aufeinanderfolgend einen Befestigungsbereich 2, eine daran angrenzende Fußplatte 3, ein Schaufelblatt 4 und ein an deren Schaufelspitze anschließendes Kopfteil 5 auf, das eine an das Schaufelblatt 4 angrenzende Kopfplatte 6 besitzt. Das Kopfteil 5 ist nicht vorhanden, wenn die Turbinenschaufel als Laufschaufel ausgebildet ist.

Im Befestigungsbereich 2 ist ein Schaufelfuß 7 gebildet, der zur Befestigung der Leitschaufel 1 an einer Scheibe dient (nicht dargestellt). Der Schaufelfuß 7 ist hier als Schwalbenschwanzfuß ausgebildet ist. Andere Ausgestaltungen als Tannenbaumfuß oder Hammerkopf sind möglich. Das Schaufelblatt 4 weist für das die Strömungsmaschine durchsetzende Medium, das an dem Schaufelblatt 4 vorbeiströmt, eine Anströmkante 8 und eine Abströmkante 9 auf.

Herkömmliche Schaufeln bestehen beispielsweise aus massiven metallischen Werkstoffen, insbesondere Superlegierungen. Solche Superlegierungen sind beispielsweise aus der EP 1 204 776 B1, EP 1 306 454, EP 1 319 729 A1, WO 99/67435 oder WO 00/44949 bekannt; diese Schriften sind bezüglich der chemischen Zusammensetzung der Legierung Teil der Offenbarung. Die Turbinenschaufel kann hierbei durch ein Gussverfahren, auch mittels gerichteter Erstarrung, durch ein Schmiedeverfahren, durch ein Fräsverfahren oder Kombinationen daraus gefertigt sein.

Die Turbinenschaufeln werden mit einer Beschichtung gegen Korrosion oder Oxidation versehen, z.B. MCrAlX (M ist zumindest ein Element der Gruppe Eisen (Fe), Cobalt (Co), Nickel (Ni), X ist ein Aktivelement und steht für Yttrium (Y) und/oder Silicium und/oder zumindest ein Element der Seltenen Erden bzw. Hafnium (Hf)). Solche Legierungen sind bekannt aus der EP 0 486 489 B1, EP 0 786, 017 B1, EP 0 412 297 B1 oder EP 1 306 454 A1, die bezüglich der chemischen Zusammensetzung der Legierung Teil dieser Offenbarung sein sollen.

Auf der MCrAlX-Beschichtung kann noch eine Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Calciumoxid und/oder Magnesiumoxid. Durch geeignete Beschichtungsverfahren wie z.B. Elektronenstrahlverdampfen (EB-PVD) werden stängelförmige Körper in der Wärmedämmschicht erzeugt oder durch atmosphärisches Plasmaspritzen (APS) poröse, mikro- und makrorissbehaftete Körner in der Wärmedämmschicht erzeugt.

Wiederaufarbeitung (Refurbishment) bedeutet, dass Bauteile nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch Risse im Bauteil repariert. Danach erfolgt eine Wiederbeschichtung und ein erneuter Einsatz der Turbinenschaufel.

Die Leitschaufel 1 ist hohl ausgeführt. Sie weist auf der in Figur 1 sichtbaren Druckseite des Schaufelblatts 4 im Bereich der Abströmkante 9 eine Reihe von Filmkühllöchern - beispielhaft mit 10 bezeichnet - auf, über die in das Schaufelblatt 4 eingeleitete Kühlluft ausströmen kann, wodurch die Abströmkante 9 gekühlt wird.

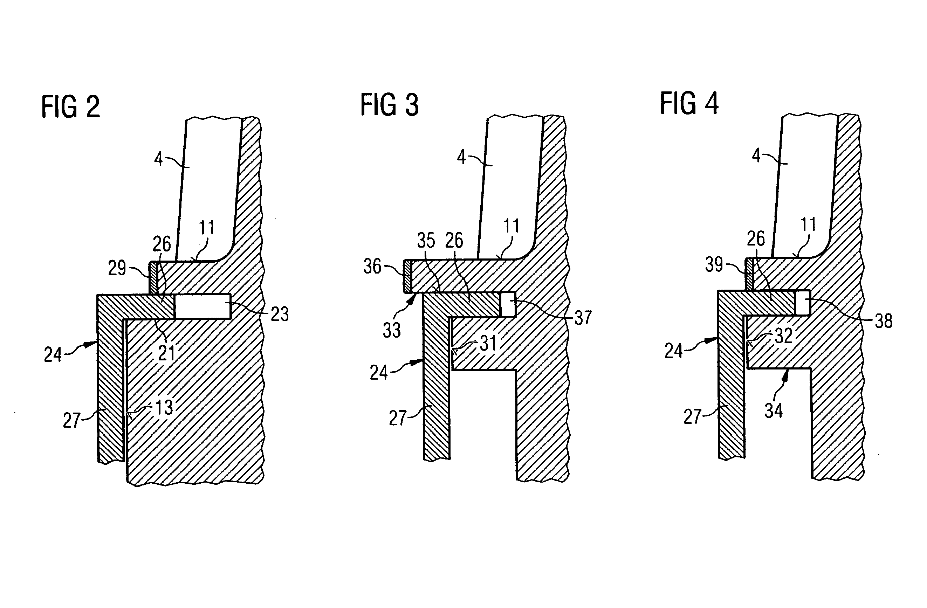

Die Fußplatte 3 und die Kopfplatte 6 haben jeweils eine dem Schaufelblatt 4 zugewandte Heißgasseite 11, 12. An die Heißgasseiten 11, 12 schließen sich jeweils vier Umfangsflächen 13, 14, 15, 16 bzw. 17, 18, 19, 20 an, die jeweils mit einer Stufe 21, 22 versehen sind, wie sie sich auch aus Figur 2 ergibt. Die Stufen 21, 22 springen gegenüber dem dem Schaufelblatt 4 jeweils benachbarten Bereich der Umfangsflächen 13 bis 20 nach außen vor. Die Stufen 21, 22 gehen in eine umlaufende Nut 23 über. Sowohl in die Umfangsflächen 13 bis 16 der Fußplatte 3 als auch in die Umfangsflächen 17 bis 20 der Kopfplatte 6 sind solche Nuten 23 eingeformt.

In die Nuten 23 eingesteckt sind Abdeckleisten 24, 25. Die Abdeckleisten 24, 25 erstrecken sich über die gesamte Breite der Umfangsfläche 13 bzw. 17. Sie sind als Winkelprofile mit jeweils einem Einsteckschenkel 26 und einem jeweils rechtwinklig dazu verlaufenden Schutzschenkel 27, 28 ausgebildet. Die Einsteckschenkel 26 sitzen in den Nuten 23 und bilden auf diese Weise eine Steckverbindung mit der Fußplatte 3 bzw. der Kopfplatte 6. Die Abdeckleisten 24, 25 sind so in die Nuten 23 eingesetzt, dass deren Schutzschenkel 27, 28 von der jeweiligen Heißgasseite 11 bzw. 12 weggerichtet sind und die Bereiche der Umfangsflächen 13 bzw. 17 abdecken, die - von dem Schaufelblatt 4 gesehen - hinter den Nuten 23 liegen.

Die Leitschaufel 1 wird mit den Abdeckleisten 24, 25 in einer Sprühbeschichtungsvorrichtung mit der oben beschriebenen Beschichtung versehen, und zwar derart, dass das Schaufelblatt 4 und die Heißgasseiten 11, 12 der Fußplatte 3 bzw. Kopfplatte 6 beschichtet werden. Der Beschichtungsvorgang erzeugt auch eine Overspraybeschichtung 29, 30 auf den von den Abdeckleisten 24, 25 nicht abgedeckten Bereichen der Umfangsflächen 13, 17. Die Oberspraybeschichtungen 29, 30 werden nach dem Beschichtungsvorgang manuell abgeschliffen, wobei die Abdeckleisten 24, 25 an der Fußplatte 3 bzw. Kopfplatte 6 verbleiben und so einen Schutz gegen Abrutschen des Schleifgeräts bilden. Auf diese Weise bleibt das Abschleifen auf den Bereich beschränkt, der die Overspraybeschichtung 29, 30 trägt. Erst nach dem Abschleifen werden die Abdeckleisten 24, 25 wieder entfernt und können dann wieder verwendet werden.

Die Figuren 3 und 4 zeigen von der Ausführungsform gemäß den Figuren 1 und 2 abweichende Ausbildungen von Umfangsflächen 31, 32 von Fußplatten 33, 34. Bei der Ausführungsform gemäß Figur 3 ist eine Stufe 35 dadurch gebildet, dass der dem Schaufelblatt 4 benachbarte Bereich der Umfangsfläche 31 nach außen vorspringt, wobei sich auf diesem Teil eine Oberspraybeschichtung 36 gebildet hat. Die Stufe 35 geht in eine Nut 37 über, in die die Abdeckleiste 24 mit dem Einsteckschenkel 26 eingesteckt ist.

Bei dem Ausführungsbeispiel gemäß Figur 4 ist keine Stufe vorhanden. In die Umfangsfläche 32 ist eine Nut 38 eingeformt, in die die Abdeckleiste 24 derart eingesteckt ist, dass sich ihr Schutzschenkel 27 von dem Schaufelblatt 4 weggerichtet erstreckt. Der dem Schaufelblatt 4 benachbarte Bereich der Umfangsfläche 32 ist mit einer Overspraybeschichtung 39 versehen.

## Patentansprüche

1. Verfahren zur Vorbereitung von Turbinenschaufeln (1) für eine anschließende Behandlung,
beispielsweise das Aufbringen einer Beschichtung und/oder eine abtragende Bearbeitung,
wobei die Turbinenschaufel (1) ein Schaufelblatt (4) aufweist, das an zumindest einem Ende von einer Endplatte (3, 6, 33, 34) begrenzt wird, die eine dem Schaufelblatt (4) zugewandte Heißgasseite (11, 12) und daran anschließende Umfangsflächen (13-16; 17-20; 31, 32) aufweist,
wobei zumindest eine der Umfangsflächen (13-16; 17-20; 31, 32) vor der Behandlung der Turbinenschaufel (1) wenigstens teilweise abgedeckt wird,
**dadurch gekennzeichnet,**
**dass** auf wenigstens einer Umfangsfläche (13, 17, 31, 32) eine Abdeckleiste (24, 25) unter Bildung einer Steckverbindung aufgesetzt wird, wobei Umfangsfläche(n) (13, 17, 31, 32) und Abdeckleiste(n) (24, 25) derart aneinander angepasst werden, dass ihre Steckverbindung eine Nut-Feder-Verbindung ergibt, und
**dass** in wenigstens eine der Umfangsflächen (13, 17, 31, 32) eine Nut (23, 37, 38) eingeformt wird und
eine Abdeckleiste (24, 25) verwendet wird,
die einen Einsteckschenkel (26) aufweist,
der in die Nut eingesteckt wird.

2. Verfahren nach Anspruch 1,
**dadurch gekennzeichnet, dass**
eine Abdeckleiste (24, 25) verwendet wird, die im aufgesteckten Zustand den Bereich der Umfangsfläche (13, 17, 31, 32) abdeckt, der sich auf der dem Schaufelblatt (4) abgewandten Seite der Steckverbindung erstreckt.

3. Verfahren nach Anspruch 1,
**dadurch gekennzeichnet, dass**
eine Abdeckleiste (24, 25) verwendet wird, die als Winkelprofil mit einem sich an den Einsteckschenkel (26) anschließenden Schutzschenkel (27, 28) ausgebildet ist.

4. Verfahren nach Anspruch 3,
**dadurch gekennzeichnet, dass**
eine Abdeckleiste (24, 25) verwendet wird, bei der Einsteckschenkel (26) und Schutzschenkel (27, 28) im rechten Winkel zueinander liegen.

5. Verfahren nach einem der Ansprüche 1 bis 4,
**dadurch gekennzeichnet, dass**
eine Abdeckleiste (24, 25) verwendet wird, deren Länge größer ist als die Tiefe des Schaufelblatts (4).

6. Verfahren nach einem der Ansprüche 1 bis 5,
**dadurch gekennzeichnet, dass**
in die Umfangsflächen (13-16; 17-20; 31) zumindest im Bereich der Steckverbindung eine Stufe (21, 22, 35) eingeformt wird.

7. Verfahren nach Anspruch 6,
**dadurch gekennzeichnet, dass**
die Stufe (21, 22) so geformt wird, dass sie an der dem Schaufelblatt (4) abgewandten Seite der Steckverbindung nach außen vorspringt.

8. Verfahren nach Anspruch 6,
**dadurch gekennzeichnet, dass**
die Stufe (35) so geformt wird, dass sie an der dem Schaufelblatt (4) zugewandten Seite der Steckverbindung nach außen vorspringt.

9. Turbinenschaufel (1) mit einem Schaufelblatt (4),
das an zumindest einem Ende von einer Endplatte (3, 6, 33, 34) begrenzt ist, die eine dem Schaufelblatt (4) zugewandte Heißgasseite (11, 12) und daran anschließende Umfangsflächen (13-16; 17-20; 31, 32) aufweist,
**dadurch gekennzeichnet, dass**
auf wenigstens einer der Umfangsflächen (13, 17, 31, 32) eine Abdeckleiste (24, 25) unter Bildung einer als Nut-Feder-Verbindung ausgebildeten Steckverbindung mit einer Steckverbindungsausnehmung (23, 37, 38) aufgesetzt ist, wobei wenigstens eine der Umfangsflächen (13, 17, 31, 32) jeweils zumindest eine als Nut ausgebildete Steckverbindungsausnehmung (23, 37, 38) aufweist.

10. Turbinenschaufel nach Anspruch 9,
**dadurch gekennzeichnet, dass**
die Umfangsflächen (13-16; 17-20; 31) im Bereich der Steckverbindungsausnehmung (23, 37) bzw. dem Steckverbindungsvorsprung eine Stufe (21, 22, 35) aufweist.

11. Turbinenschaufel nach Anspruch 10,
**dadurch gekennzeichnet, dass**
die Stufe (21, 22) auf der dem Schaufelblatt (4) abgewandten Seite der Steckverbindungsausnehmung (23) bzw. des Steckverbindungsvorsprungs vorspringt.

12. Turbinenschaufel nach Anspruch 10,
**dadurch gekennzeichnet, dass**
die Stufe (35) auf der dem Schaufelblatt (4) abgewandten Seite der Steckverbindungsausnehmung (37) bzw. des Steckverbindungsvorsprungs vorspringt.

13. Turbinenschaufel nach Anspruch 12,
**dadurch gekennzeichnet, dass**
auf wenigstens einer Umfangsfläche (13, 17, 31, 32) eine Abdeckleiste (24, 25) unter Bildung einer Steckverbindung mit der Steckverbindungsausnehmung (23, 37, 38) bzw. dem Steckverbindungsvorsprung aufgesetzt ist.

14. Turbinenschaufel nach einem der Ansprüche 9 bis 13,
**dadurch gekennzeichnet, dass**
die Abdeckleiste (24, 25) den Bereich der Umfangsfläche (13, 17, 31, 32) abdeckt, der sich auf der dem Schaufelblatt (4) abgewandten Seite der Steckverbindung erstreckt.

15. Turbinenschaufel nach Anspruch 9,
**dadurch gekennzeichnet, dass**
die Abdeckleiste (24, 25) einen Einsteckschenkel (26) aufweist, der in die zumindest eine Steckverbindungsausnehmung (23, 37, 38) passt.

16. Turbinenschaufel nach Anspruch 15,
**dadurch gekennzeichnet, dass**
die Abdeckleiste (24, 25) als Winkelprofil mit einer sich an den Einsteckschenkel (26) im Winkel anschließenden Schutzschenkel (27, 28) ausgebildet ist.

17. Turbinenschaufel nach Anspruch 16,
**dadurch gekennzeichnet,**
**dass** Einsteckschenkel (26) und Schutzschenkel (27, 28) im rechten Winkel zueinander liegen.

18. Turbinenschaufel nach einem der Ansprüche 9 bis 17,
**dadurch gekennzeichnet, dass**
die Länge der Abdeckleiste (24, 25) größer ist als die Tiefe des Schaufelblatts (4).

19. Turbinenschaufel nach einem der Ansprüche 9 bis 18,
**dadurch gekennzeichnet, dass**
die Abdeckleiste (24, 25) aus Metall besteht.

20. Turbinenschaufel nach einem der Ansprüche 9 bis 19,
**dadurch gekennzeichnet, dass**
das Schaufelblatt (4) an beiden Enden von Endplatten (3, 6, 33, 34) begrenzt ist und auf jeweils zumindest eine der Umfangsflächen (13, 17) beider Endplatten (3, 6, 33, 34) eine Abdeckleiste (24, 25) aufgesteckt ist.

## Claims

1. Process for preparing turbine blades or vanes (1) for a subsequent treatment,
for example the application of a coating and/or a material-removing operation,
wherein the turbine blade or vane (1) has an airfoil (4), which is delimited at at least one end by an endplate (3, 6, 33, 34) that has a hot-gas side (11, 12) facing the airfoil (4) and adjoining peripheral surfaces (13-16; 17-20; 31, 32),
wherein at least one of the peripheral surfaces (13-16; 17-20; 31, 32) is at least partially covered prior to the treatment of the turbine blade or vane (1),
**characterized**
**in that** a covering strip (24, 25) is placed onto at least one peripheral surface (13, 17, 31, 32) to form a plug connection, wherein peripheral surface(s) (13, 17, 31, 32) and covering strip(s) (24, 25) are matched to one another in such a manner that their plug connection produces a tongue-and-groove connection, and
**in that** a groove (23, 37, 38) is formed into at least one of the peripheral surfaces (13, 17, 31, 32), and
a covering strip (24, 25)
which has a plug-in limb (26)
that is plugged into the groove
is used.

2. Process according to Claim 1,
**characterized in that**
the covering strip (24, 25) used, in the plugged-on state, covers that region of the peripheral surface (13, 17, 31, 32) which extends on the side of the plug connection remote from the airfoil (4).

3. Process according to Claim 1,
**characterized in that**
the covering strip (24, 25) used is formed as an angle profiled section with a protective limb (27, 28) adjoining the plug-in limb (26).

4. Process according to Claim 3,
**characterized in that**
the covering strip (24, 25) used has its plug-in limb (26) and protective limb (27, 28) at right angles to one another.

5. Process according to one of Claims 1 to 4,
**characterized in that**
the covering strip (24, 15) used has a length that is greater than the depth of the airfoil (4).

6. Process according to one of Claims 1 to 5,
**characterized in that**
a step (21, 22, 35) is formed into the peripheral surfaces (13-16; 17-20; 31) at least in the region of the plug connection.

7. Process according to Claim 6,
**characterized in that**
the step (21, 22) is shaped in such a way that it projects outward on the side of the plug connection remote from the airfoil (4).

8. Process according to Claim 6,
**characterized in that**
the step (35) is shaped in such a way that it projects outward on the side of the plug connection facing the airfoil (4).

9. Turbine blade or vane (1) having an airfoil (4),
which is delimited at at least one end by an endplate (3,6, 33, 34) that has a hot-gas side (11, 12) facing the airfoil (4) and adjoining peripheral surfaces (13-16; 17-20; 31, 32), **characterized in that**
a covering strip (24, 25) is fitted onto at least one peripheral surface (13, 17, 31, 32) to form a plug connection, formed as a tongue-and-groove connection, to a plug-connection recess (23, 37, 38),
wherein at least one of the peripheral surfaces (13, 17, 31, 32) in each case has at least one plug-connection recess (23, 37, 38) formed as a groove.

10. Turbine blade or vane according to Claim 9,
**characterized in that**
the peripheral surfaces (13-16; 17-20; 31) have a step (21, 22, 35) in the region of the plug-connection recess (23, 37) or the plug-connection projection.

11. Turbine blade or vane according to Claim 10,
**characterized in that**
the step (21, 22) projects on that side of the plug-connection recess (23) or plug-connection projection which is remote from the airfoil (4).

12. Turbine blade or vane according to Claim 10,
**characterized in that**
the step (35) projects on that side of the plug-connection recess (37) or plug-connection projection which is remote from the airfoil (4).

13. Turbine blade or vane according to Claim 12,
**characterized in that**
a covering strip (24, 25) is fitted onto at least one peripheral surface (13, 17, 31, 32) to form a plug connection to the plug-connection recess (23, 37, 38) or plug-connection projection.

14. Turbine blade or vane according to one of Claims 9 to 13,
**characterized in that**
the covering strip (24, 25) covers that region of the peripheral surface (13, 17, 31, 32) which extends on the side of the plug connection remote from the airfoil (4).

15. Turbine blade or vane according to Claim 9,
**characterized in that**
the covering strip (24, 25) has a plug-in limb (26) which fits into the at least one plug-connection recess (23, 37, 38).

16. Turbine blade or vane according to Claim 15,
**characterized in that**
the covering strip (24, 25) is formed as an angle profiled section having a protective limb (27, 28) which adjoins the plug-in limb (26) at an angle.

17. Turbine blade or vane according to Claim 16,
**characterized in that**
the plug-in limb (26) and protective limb (27, 28) are at right angles to one another.

18. Turbine blade or vane according to one of Claims 9 to 17,
**characterized in that**
the length of the covering strip (24, 25) is greater than the depth of the airfoil (4).

19. Turbine blade or vane according to one of Claims 9 to 18,
**characterized in that**
the covering strip (24, 25) consists of metal.

20. Turbine blade or vane according to one of Claims 9 to 19,
**characterized in that**
the airfoil (4) is delimited at both ends by endplates (3, 6, 33, 34) and a covering strip (24, 25) is fitted onto in each case at least one of the peripheral surfaces (13, 17) of both endplates (3, 6, 33, 34).

## Revendications

1. Procédé de préparation d'aubes ( 1 ) de turbine en vue d'un traitement ultérieur par,
par exemple en vue du dépôt d'un revêtement et/ou d'un usinage avec enlèvement de matière,
dans lequel l'aube ( 1 ) de turbine comporte une lame ( 4 d'aube qui est délimitée à au moins une extrémité par une plaque ( 3, 6, 33, 34 ) d'extrémité, qui a un côté ( 11, 12 ) de gaz chaud tourné vers la lame ( 4 ) de l'aube et des surfaces ( 13 à 16, 17 à 20, 31, 32 ) de pourtour qui s'y raccorde,
dans lequel on recouvre au moins en partie au moins l'une des surfaces ( 13 à 16, 17 à 20, 31, 32 ) de pourtour avant le traitement de l'aube ( 1 ) de turbine,
**caractérisé**
**en ce que** l'on met sur au moins une surface ( 13 à 16, 17 à 20, 31, 32 ) une réglette ( 24, 25 ) de recouvrement avec formation d'une liaison par enfichage, la ou les surfaces ( 13 à 16, 17 à 20, 31, 32 ) de pourtour et la ou les réglettes ( 24, 25 ) de recouvrement étant adaptées les unes aux autres de manière à ce que leur liaison par enfichage donne une liaison par tenon et mortaise, et
**en ce que** dans au moins l'une des surfaces ( 13, 17, 31, 32 ) de pourtour est formée une rainure ( ( 23, 37, 38 ) et
on utilise une réglette ( 24, 25 ) de recouvrement,
qui a une branche ( 26 ) d'enfichage,
qui est enfichée dans la rainure.

2. Procédé suivant la revendication 1,
**caractérisé en ce que**
on utilise une réglette ( 24, 25 ) de recouvrement qui recouvre à l'état enfiché la partie de la surface ( 13, 17, 31, 32 ) de pourtour, qui s'étend du côté de la liaison par enfichage éloigné de la lame ( 4 ) de l'aube.

3. Procédé suivant la revendication 1,
**caractérisé en ce que**
on utilise une réglette ( 24, 25 ) de recouvrement qui est constituée sous la forme d'une cornière ayant une branche ( 27, 28 ) de protection se raccordant à la branche ( 26 ) d'enfichage.

4. Procédé suivant la revendication 3,
**caractérisé en ce que**
on utilise une réglette ( 24, 25 ) de recouvrement dans laquelle la branche ( 26 ) d'enfichage et la branche ( 27, 28 ) de protection sont à angle droit l'une par rapport à l'autre.

5. Procédé suivant l'une des revendications précédentes 1 à 4,
**caractérisé en ce que**
on utilise une réglette ( 24, 25 ) de recouvrement dont la longueur est plus grande que la profondeur de la lame ( 4 ) de l'aube.

6. Procédé suivant l'une des revendications précédentes 1 à 5,
**caractérisé en ce qu'**on forme un épaulement ( 21, 22, 35 ) dans les surfaces ( 13 à 16 ; 17 à 20, 31 ) de pourtour au moins dans la partie de liaison par enfichage.

7. Procédé suivant la revendication 6,
**caractérisé en ce qu'**on forme l'épaulement ( 21, 22 ) de manière à ce qu'il fasse saillie vers l'extérieur du côté de la liaison par enfichage éloigné de la lame ( 4 ) de l'aube.

8. Procédé suivant la revendication 6,
**caractérisé en ce qu'**on forme l'épaulement ( 35 ) de manière à ce qu'il fasse saillie vers l'extérieur du côté de la liaison par enfichage tourné vers la lame ( 4 ) de l'aube.

9. Aube ( 1 ) de turbine ayant une lame ( 4 ) d'aube, qui est délimitée à au moins une extrémité par une plaque ( 3, 6, 33, 34 ) d'extrémité, qui a un côté ( 11, 12 ) de gaz chaud tourné vers la lame ( 4 ) de l'aube et des surfaces ( 13 à 16, 17 à 20, 31, 32 ) de pourtour s'y raccordant,
**caractérisée en ce que**
une réglette ( 24, 25 ) de recouvrement est mise sur au moins l'une des surfaces ( 13, 17, 31, 32 ) de pourtour en formant une liaison par enfichage constituée en liaison par tenon et mortaise et ayant un évidement ( 23, 37, 38 ) de liaison par enfichage, au moins l'une des surfaces ( 13, 17, 31, 32 ) de pourtour ayant respectivement un évidement ( 23, 37, 38 ) de liaison par enfichage constitué sous la forme d'une rainure.

10. Aube de turbine suivant la revendication 9,
**caractérisée en ce que**
les surfaces ( 13 à 16 ; 17 à 20 ; 31 ) de pourtour ont un épaulement ( 21, 22, 23 ) dans la partie de l'évidement ( 23, 37 ) de liaison par enfichage ou dans la saillie de la liaison par enfichage.

11. Aube de turbine suivant la revendication 10,
**caractérisée en ce que**
l'épaulement ( 21, 22 ) dépasse du côté de l'évidement ( 23 ) de la liaison par enfichage ou de la saillie de la liaison par enfichage qui est éloigné de la lame ( 4 ) de l'aube.

12. Aube de turbine suivant la revendication 10,
**caractérisée en ce que**
l'épaulement ( 35 ) dépasse du côté de l'évidement ( 37 ) de la liaison par l' enfichage ou de la saillie de la liaison par enfichage qui est éloigné de la lame ( 4 ) de l'aube.

13. Aube de turbine suivant la revendication 12,
**caractérisée en ce qu'**une réglette ( 24, 25 ) de recouvrement est mise sur au moins une surface ( 13, 17, 31, 32 ) de pourtour avec formation d'une liaison par enfichage avec l'évidement ( 23, 37, 38 ) de liaison par enfichage ou avec la saillie de liaison par enfichage.

14. Aube de turbine suivant l'une des revendications précédentes 9 à 13,
**caractérisée en ce que**
la réglette ( 24, 25 ) de recouvrement recouvre la partie de la surface ( 13, 17, 31, 32 ) de pourtour, qui s'étend du côté de la liaison par enfichage éloigné de la lame ( 4 ) de l'aube.

15. Aube de turbine suivant la revendication 9,
**caractérisée en ce que**
la réglette ( 24, 25 ) de recouvrement a une broche ( 26 ) d'enfichage, qui s'adapte dans le au moins un évidement ( 23, 37, 38 ) de la liaison par enfichage.

16. Aube de turbine suivant la revendication 15,
**caractérisée en ce que**
la réglette ( 24, 25 ) de recouvrement est constituée sous la forme d'une cornière ayant une branche ( 27, 28 ) de protection se raccordant suivant un angle avec la branche ( 26 ) d'enfichage.

17. Aube de turbine suivant la revendication 16,
**caractérisée en ce que**
la branche ( 26 ) d'enfichage et la branche ( 27, 28 ) de protection sont à angle droit entre elles.

18. Aube de turbine suivant l'une des revendications précédentes 9 à 17,
**caractérisée en ce que**
la longueur de la réglette ( 24, 25 ) de recouvrement est plus grande que la profondeur de la lame ( 4 ) de l'aube.

19. Aube de turbine suivant l'une des revendications précédentes 9 à 18,
**caractérisée en ce que**
la réglette ( 24, 25 ) de recouvrement est en métal.

20. Aube de turbine suivant l'une des revendications précédentes 9 à 19,
**caractérisée en ce que**
la lame ( 4 ) de l'aube est délimitée aux deux extrémités par des plaques ( 3, 6, 33, 34 ) d'extrémité et une réglette ( 24, 25 ) de recouvrement est enfichée sur respectivement au moins l'une des surfaces ( 13, 17 ) de pourtour de deux plaques ( 3, 6, 33, 34 ) d'extrémité.
